# EUROPEAN PATENT APPLICATION

(11) **EP 3 534 139 A1**
(43) Date of publication of application: **04.09.2019**
(21) Application number: 18159495.3
(22) Date of filing: 01.03.2018
(51) Int. Cl.: G01N 1/28, B41J 2/045, G01N 1/31

(54) **DEVICE AND METHOD FOR CONTROLLING THE VOLUME OF A MICRO CHAMBER ARRANGEMENT**

(71) Applicant: Koninklijke Philips N.V., 5656 AE Eindhoven (NL)
(72) Inventor: PIERIK, Anke, 5656 AE Eindhoven (NL); WIMBERGER-FRIEDL, Reinhold, 5656 AE Eindhoven (NL); DE LAAT, Koen, 5656 AE Eindhoven (NL)
(74) Representative: de Haan, Poul Erik

(57) **Abstract**

Disclosed is a device for controlling a volume of an analysis chamber of a micro chamber arrangement to which a region of interest of an object is exposed. The volume is controlled using a volume reducing element which is deposited on a surface of the micro chamber arrangement. The device comprises a deposition unit configured to determine a positon and an extent of the volume reducing element depending on (a) the region of interest and further depending on (b) a predetermined level by which a volume of the analysis chamber is reduced using the volume reducing structure. The deposition unit is further configured to deposit the volume reducing element depending on the determined position and extent.

## Description

### FIELD OF THE INVENTION

The invention relates to methods and devices for manufacturing microchamber arrangements which are used to examine an object. The object may be a section of a biological tissue. Specifically, the present invention relates to methods and devices for providing a micro chamber arrangement having an analysis chamber of a desired volume for extracting nucleic acids from the object.

### BACKGROUND OF THE INVENTION

In some studies of molecular diagnostics (abbreviated as "MDX") molecular biology is applied to nucleic acids extracted from sliced tissue sections in order to inspect pathologically altered cells of the section at the DNA, RNA and protein level using diagnostic methods, such as PCR (polymerase chain reaction) and sequencing. MDX has revolutionised research and diagnosis in pathology, since it allows for diagnosis and monitoring of diseases, detection of risks and decisions to be made as to which therapies will work best for an individual patient.

However, in some of these studies, the reliability of the outcome critically depends on the relative abundance of the cell population which is to be examined. Therefore, the inherent heterogeneity of the tissue section which typically includes different reactive cell populations may lead to false results. Notably, tumor tissues generally consist of many different cell types, not only cancer cells, and even the cancer cells can differ a great deal in molecular constitution in different areas of the tumor. Also the heterogeneity within the cancer cell population causes noise which reduces the sensitivity and specificity as well as the reproducibility. The result of molecular examination studies therefore depend on the exact composition of the tissue section which is used as a sample for the molecular test.

In order to ensure the required reliability of the sensitive analytical procedures used for molecular examination, various techniques for microdissection of histological sections have been developed. Some of these techniques use laser beams in order to avoid the disadvantages inherent to techniques involving manual or micromanipulator guidance. Other microdissection techniques allow isolation of a region of interest located in the object which then is exposed to a lysis buffer within an extraction chamber. In order to provide a standardized workflow, it is desirable to use extraction chambers of identical configurations. However, it has been shown that this leads to a dilution of extracted nucleic acids if the region of interest is much smaller than the extraction chamber's volume. The more diluted the nucleic acids are, the more insensitive and inconclusive the test is.

Therefore, a need exists to provide a device and a method which allow more accurate molecular diagnosis.

This need is met by the subject-matter of the independent claims.

### SUMMARY OF THE INVENTION

Embodiments of the present disclosure provide a device for controlling and/or manufacturing a volume of an analysis chamber of a micro chamber arrangement to which a region of interest of an object is exposed. The volume is controlled using a volume reducing element which is deposited on a surface of the micro chamber arrangement. The device comprises a deposition unit configured to determine a position and an extent of the volume reducing element depending on (a) the region of interest and further depending on (b) a predetermined level by which a volume of the analysis chamber is reduced using the volume reducing element. The device is further configured to deposit the volume reducing element depending on the determined position and extent.

The position and extent of the region of interest and/or the volume reducing structure may be measured in a plane parallel to an object receiving surface of the micro chamber arrangement. The deposition unit may further be configured to determine a height of the volume reducing structure depending on the region of interest and/or the predetermined level by which the volume of the analysis chamber is reduced. The height may be measured in a direction perpendicular to the object receiving surface.

The deposition unit may include a data processing system, such as a computer. The computer may include a display device, a memory and/or one or more input devices, such as a keyboard, and/or a mouse. The data processing system may be configured to read data indicative of a position and an extent of the region of interest. The data processing system may be configured to automatically and/or user-interactively (i.e. based on user interaction) determine the position and the extent of the region of the region of interest. The user-interactive determination of the region of interest may be performed using a graphical user interface of the data processing system. The graphical user interface may be configured to display, on a display device, an image acquired from at least a portion of the object. The image may be acquired using transmitted and/or reflected light microscopy. The image data may have been acquired using a digital scanner. By way of example, the digital scanner may be a line sensor-based digital scanner. The graphical user interface may further be configured to receive user input indicative of one or more parameters of a position and/or an extent of the region of interest. By way of example, the graphical user interface may be configured to allow the user to mark the position and/or the extent of the region of interest in the image which is displayed on the display device.

The deposition unit may further include a device for depositing the volume reducing element. The device for depositing the volume reducing element may be in signal communication with the data processing system. The data processing system may be configured to control the device for depositing the volume reducing element depending on the determined position and extent of the volume reducing element. By way of example, the device for depositing the volume reducing element is a printer.

The region of interest may be a portion of the object which is to be exposed to the analysis chamber. An analysis liquid which is introduced into the analysis chamber may extract nucleic acids from the region of interest. The analysis liquid may include a lysis buffer. The analysis liquid may include water as a primary constituent. The deposition unit may be configured to determine the position and extent of the volume reducing element so that the region of interest is left exposed after the deposition of the volume reducing element.

By way of example, the object is obtained by cutting a section from a biopsy sample. The biopsy sample may be paraffin-embedded. The object may be deposited on an object receiving surface of a substrate of the micro chamber arrangement. The substrate may be transparent. By way of example, at least a portion of the substrate may be a microscope slide. The slice-shaped object may have a thickness of less than 50 micrometers or less than 10 micrometers. The thickness of the object may be greater than 1 micrometer or greater than 2 micrometers.

The micro chamber arrangement may include a substrate to which the object is attached. Further, the micro chamber arrangement may include a cover for covering the object which is attached to the substrate. The substrate and the cover may form a gap, in particular a planar gap. The object may be disposed within the gap. The substrate and the cover may form at least a part of an encasing which encases the object so as to form the analysis chamber. The analysis chamber may be configured so that liquid which is introduced into the analysis chamber is prevented from leaking out from the analysis chamber. The cover may be abuttingly attached to the substrate and/or may be attached to the substrate via one or more spacer elements. The one or more spacer elements may be configured as a liquid-tight seal for preventing the analysis liquid from leaking out from the gap formed by the substrate and the cover. The volume reducing element may be deposited on a surface of the cover and/or on a surface of the substrate, in particular on an object receiving surface of the substrate.

The planar gap formed by the substrate and the cover may have a width of less than 3 millimeters, or less than 2 millimeters, or less than 1 millimeter. The width may be greater than 0.1 millimeter or greater than 0.2 millimeter. A volume of the analysis chamber without the volume reducing element disposed therein may be less than 2000 microliter, less than 1000 microliter, or less than 700 microliter, or less than 500 microliter. The volume may be greater than 50 microliter or greater than 100 microliter.

The micro chamber arrangement may include one or more fluid ports for introducing the analysis liquid into and discharging the analysis liquid from the analysis chamber. The fluid ports may be formed using one or more openings which are provided in the substrate and/or in the cover.

According to an embodiment, the deposition unit is configured to deposit the volume reducing element so that the analysis chamber has a predetermined volume. The predetermined volume may be a predetermined volume for a plurality of different objects, each of which having a region of interest of different location and/or extent. By way of example, the predetermined volume is less than 200 microliter or less than 100 microliter or less than 50 microliter. The predetermined volume may be greater than 10 microliter.

According to a further embodiment, the deposition unit is configured to deposit the volume reducing element layer-by-layer, preferably by printing. Each of the layers may have a thickness which is less than 100 micrometers, or less than 80 micrometers, or less than 50 micrometers. The thickness may be greater than 5 micrometers, or greater than 10 micrometers.

According to a further embodiment, the deposition unit is configured to deposit a liquid on the surface of the micro analysis chamber. The liquid may solidify and/or may be solidifiable to form at least a portion of the volume reducing element. The liquid may solidify, for example by drying and/or by cooling (e.g. when using solid ink). Additionally or alternatively, the liquid may be solidifiable by exposing the liquid to heat, pressure, electromagnetic radiation and/or chemicals. Additionally or alternatively, the solidification of the liquid may be performed using a cooling device for cooling the deposited liquid (e.g. for cooling solid ink). The electromagnetic radiation may include UV radiation. In the layer-by-layer deposition process, each of the layers may be solidified before the subsequent layer is deposited.

The printing of the liquid may include ejecting the liquid toward a deposition surface of the micro chamber arrangement using a nozzle. The printing process may be a non-impact printing process, in particular a dot-matrix printing process or an ink-jet printing process.

According to a further embodiment, the device is configured to acquire digital image data from at least a portion of the object. The image data may be acquired from the object when the object is deposited on the substrate. The digital image data may also be acquired from at least a portion of the substrate. The digital image data may be indicative of a position and/or an extent of the object relative to the substrate. In particular, the digital image data may be indicative of the position and extent since the image data relates to a known spatial relationship (in particular a known position and orientation) of the substrate relative to an image acquisition system which is used to acquire the digital image data. The deposition unit may be configured to semi-automatically (i.e. based on user interaction) or automatically determine the position and the extent of the volume reducing element depending on at least a portion of the digital image data. The digital image data may be acquired from one or more fiducial markers. The fiducial markers may be provided at the substrate. The device may be configured to use the fiducial markers as reference points for relating image coordinates to actual coordinates on the substrate. Additionally or alternatively, the image acquisition system, which is used for acquiring the digital image data may be arranged in a known spatial relationship relative to the substrate. In particular, the image acquisition system may be arranged in a known spatial relationship relative to a printer, in particular in a known spatial relationship relative to a sample mount of the printer. The sample mount may be configured to support the substrate during a printing process. The printing process may be used for depositing the volume reducing element and/or for depositing a film-shaped capping layer which is configured to prevent portions of the object which are not part of the region of interest from being exposed to the analysis chamber. The digital image data may be acquired using reflected-light imaging and/or microscopy and/or transmitted light imaging and/or microscopy.

The digital image data may be acquired using an image acquisition system, such as a camera, a microscope and/or a digital scanner. The graphical user interface may be configured to display the acquired image on a display device of the data processing system. The graphical user interface may be configured to receive user input indicative of one or more parameters. The data processing system may be configured to determine the position and extent of the volume reducing element depending on the parameters of the user input.

According to a further embodiment, the deposition unit is configured to determine the position and the extent of the volume reducing element so that at least a portion of the volume reducing element is configured to function as a barrier. The barrier may be configured to prevent an analysis liquid which is introduced into the analysis chamber from leaking out from a gap formed between a substrate of the micro chamber arrangement and a cover of the micro chamber arrangement. The barrier may be liquid-tight to retain the analysis liquid within the analysis chamber.

According to a further embodiment, the barrier is used to form an air-filled space which is outside the analysis chamber and between the substrate and the cover. The air-filled space may be within the planar gap formed by the cover and the substrate.

According to a further embodiment, the deposition unit is configured to determine the position and the extent of the volume reducing element further depending on a position and/or depending on an extent of one or more fluid ports of the micro chamber arrangement which open into the analysis chamber. The position and extent may be measured in a plane parallel to an object receiving surface of the substrate. The position and extent of the volume reducing element may be determined so that the fluid ports are fluidly connected via a fluid channel provided by the analysis chamber, wherein the region of interest is disposed within the fluid channel.

According to a further embodiment, the deposition unit is further configured to determine the position and the extent of the volume reducing element so that in a cross-section through an interior of the analysis chamber taken parallel to the surface of the substrate on which the object is disposed, the extent of the analysis chamber is substantially a convex hull at least for the region of interest and at least for the one or more fluid ports. A convex hull of the region of interest and of the fluid ports may be defined as the smallest convex area which includes the region of interest as well as the fluid ports.

According to a further embodiment, the deposition unit is configured to determine the position and the extent of the volume reducing element so that one or more longitudinal channels are formed using the volume reducing element for connecting the region of interest to the one or more fluid ports.

According to a further embodiment, the deposition unit is further configured to determine a position and an extent of a film-shaped capping structure which is configured to prevent portions of the object which are not part of the region of interest from being exposed to the analysis chamber. The film-shaped capping structure may be formed using a liquid which solidifies or which is solidifiable. The film-shaped capping structure may be formed layer-by-layer. A thickness of the film-shaped capping structure, measured in a width direction of the planar gap formed by the substrate and the cover, may be less than 20%, or less than 10%, or less than 5% of the width of the planar gap.

According to a further embodiment, the deposition unit is configured to determine the position and the extent of the volume reducing element so that the volume of the analysis chamber is reduced by more than 10%, by more than 20% , by more than 30% or by more than 50%, or by more than 80%.

Embodiments of the present disclosure provide a method of manufacturing and/or controlling a volume of an analysis chamber of a micro chamber arrangement to which a region of interest of an object is exposed. The volume is controlled using a volume reducing element which is deposited on a surface of the micro chamber arrangement. The method comprises determining a position and an extent of the volume reducing element depending on (a) the region of interest and further depending on (b) a predetermined level by which a volume of the analysis chamber is reduced using the volume reducing element. The method further comprises depositing the volume reducing element depending on the determined position and extent.

Embodiments of the present disclosure provide a microchamber arrangement which provides an analysis chamber. A region of interest of an object may be exposable to the analysis chamber. The micro chamber arrangement is manufactured by controlling the volume of the analysis chamber using a volume reducing element which is disposed on a surface of the micro chamber arrangement. The micro chamber arrangement may further be manufactured by determining a position and an extent of the volume reducing element depending on (a) the region of interest and further depending on (b) a predetermined level by which a volume of the analysis chamber is reduced using the volume reducing element. The micro chamber arrangement is further configured to deposit the volume reducing element depending on the determined position and extent.

Embodiments of the present disclosure provide a processing system for controlling a volume of an analysis chamber of a micro chamber arrangement to which a region of interest of an object is exposed. The volume is controlled using a volume reducing element which is deposited on a surface of the micro chamber arrangement. The processing system is configured to read and/or generate position data indicative of a position of the region of interest of the object. The processing system is further configured to calculate a position and an extent of the volume reducing element depending on (a) the position data and further depending on (b) a predetermined level by which a volume of the analysis chamber is reduced using the volume reducing element. The processing system may be configured to generate, depending on the determined position and extent of the volume reducing element, signals for controlling a device for depositing the volume reducing element.

Embodiments of the present disclosure further provide a program element for controlling a volume of an analysis chamber of a micro chamber arrangement to which a region of interest of an object is exposed. The volume is controlled using a volume reducing element which is deposited on a surface of the micro chamber arrangement. The program element, when being executed by a processor, is adapted to carry out reading and/or generating position data indicative of a position of the region of interest of the object. The program element, when being executed by a processor, is further configured to carry out calculating a position and an extent of the volume reducing element depending on (a) the position data and further depending on (b) a predetermined level by which a volume of the analysis chamber is reduced using the volume reducing element. The program element, when being executed by the processor, may further be adapted to carry out generating signals for controlling a device for depositing the volume reducing element. The signals may be generated depending on the determined position and extent of the volume reducing element. The device for depositing the volume reducing element may be configured as a printer.

These and other aspects of the invention will be apparent from and elucidated with reference to the embodiments described hereinafter.

### BRIEF DESCRIPTION OF THE DRAWING

Figures 1A is a schematic illustration of a micro chamber arrangement which forms an analysis chamber. The volume of the analysis chamber is adaptable using the device according to the exemplary embodiment disclosed herein;
Figure 1B is a cross-section through the analysis chamber taken along line *A-A* of Figure 1A;
Figure 2 is a schematic illustration of a data processing system and an image acquisition system of the device for controlling the volume of an analysis chamber of a micro chamber arrangement according to the exemplary embodiment;
Figure 3 is a schematic illustration of the data processing system and a printing device of the device for controlling the volume of the analysis chamber according to the exemplary embodiment;
Figures 4A to 4C schematically illustrate different stages of a process for manufacturing a micro chamber arrangement, wherein the process is carried out using the device of the exemplary embodiment;
Figure 5 is a cross-sectional view through the micro chamber arrangement taken along line *B* - *B* of Figure 4C;
Figure 6B is a schematic illustration of a micro chamber arrangement according to a second exemplary embodiment;

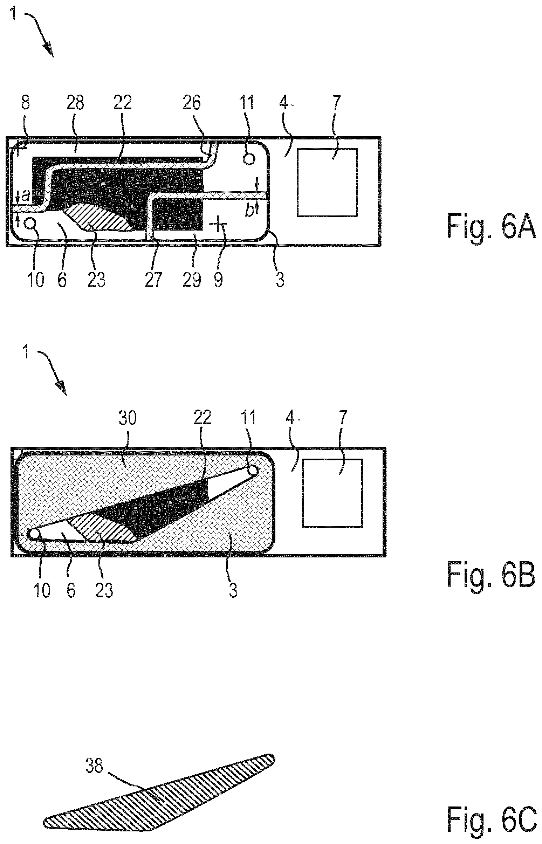

Figures 6B a is a schematic illustration of a micro chamber arrangement according to a third exemplary embodiment;
Figure 6C is a schematic illustration of a mask used for manufacturing the micro chamber arrangement according to the third exemplary embodiment;

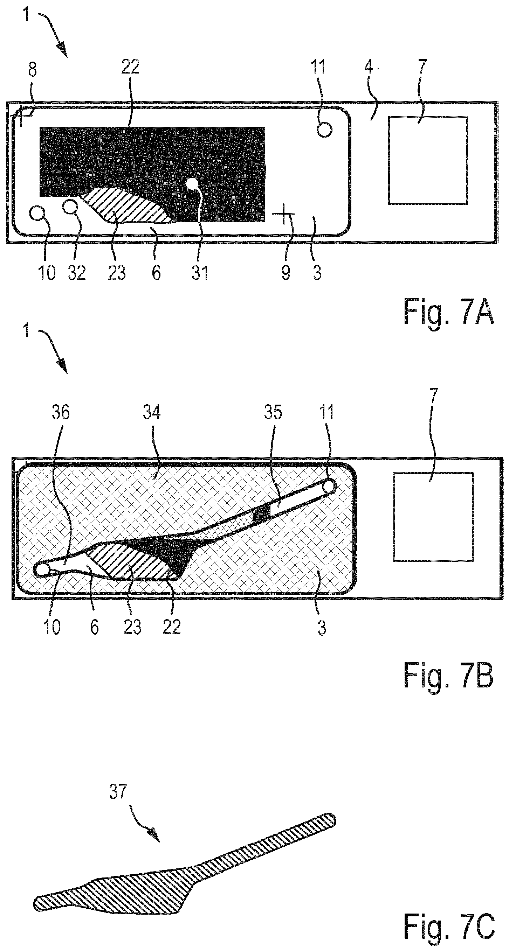

Figures 7A is a schematic illustration of a manufacturing process for manufacturing a micro chamber arrangement according to a fourth exemplary embodiment, wherein the process is carried out using the device of the exemplary embodiment;
Figure 7B a is a schematic illustration of the micro chamber arrangement according to the fourth exemplary embodiment; and
Figure 7C is a schematic illustration of a mask used for manufacturing the micro chamber arrangement according to the fourth exemplary embodiment.

### DESCRIPTION OF EMBODIMENTS

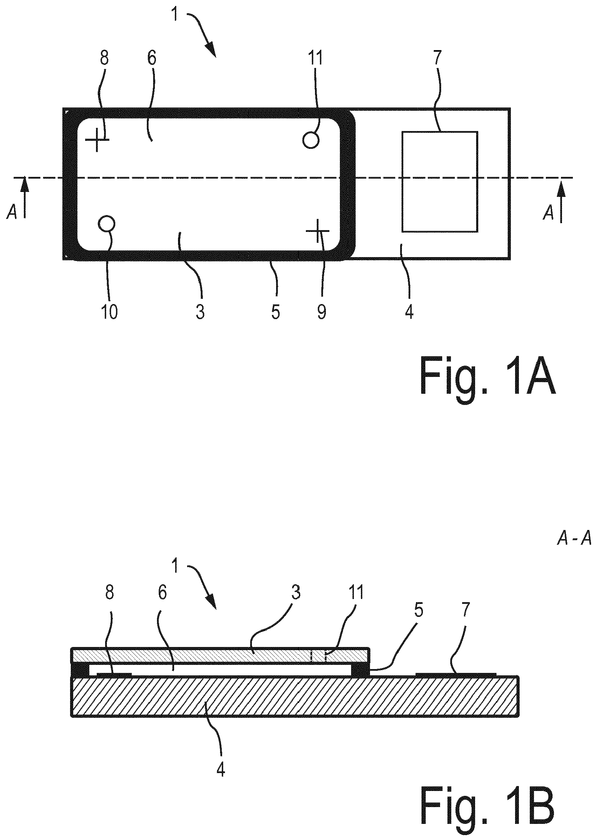

Figures 1A and 1B are schematic illustrations of an exemplary micro chamber arrangement 1. Figure 1B is a cross-section taken along line *A* - *A* of Figure 1A. The micro chamber arrangement provides an analysis chamber 6 having a volume which is less than 2000 microliter or less than 1000 microliter or less than 500 microliter. The volume may be greater than 50 microliter or greater than 100 microliter. The analysis chamber is formed using a planar gap between a substrate 4 and a cover 3 of the micro chamber arrangement 1. The analysis chamber of the micro chamber arrangement 1 is configured to accommodate at least one object for extracting nucleic acids from the object. The object is a slice-shaped section of tissue which is placed on an object receiving surface of the substrate 4 of the micro chamber arrangement 1. A thickness of the section may be less than 50 micrometers or less than 10 micrometers. The lateral extent of the object is limited by the size of the tissue processing cassette which is used to embed the object in paraffin. The lateral dimensions of the object therefore typically do not exceed 20 x 40 mm.

The substrate 4 may be made of glass, transparent plastic, and/or composites of glass and plastic. The substrate 4 may be a microscope slide, which, for example, has dimensions of 25 x 75 x 1 millimeter (side x side x height). A label 7 is attached to a surface portion of the substrate 4 which is not covered by the cover 3.

By way of example, the analysis chamber 6 has dimensions of 22 x 40 x 0.5 millimeters (side x side x height) corresponding to a volume of 440 microliters.

In order to extract nucleic acids from the object, an analysis liquid, which may include a lysis buffer, is introduced into the analysis chamber 6 through one of the fluid ports 10 and 11, which are formed by openings provided in the cover 3 of the micro chamber arrangement 1. The other one of the fluid ports 10 and 11 is used to discharge the analysis liquid from the analysis chamber 6. By way of example, the cover 3 may be made of glass, transparent plastic, and/or composites of glass and plastic. A spacer element 5 is provided between the substrate 4 and the cover 5. The spacer element 5 may function as a liquid-tight seal, preventing analysis liquid from leaking out of the analysis chamber 6.

Based on the extracted nucleic acids, molecular diagnostics (abbreviated as "MDX") of pathologically altered cells of the object can be performed. Specifically, using molecular diagnostic, it is possible to detect specific sequences in DNA or RNA that may or may not be associated with a disease. Molecular diagnostics may include analysis procedures such as PCR (several techniques are comprised under this term, like q-PCR, RT-PCR, qrt-PCR, digital PCR, etc), or RNA or DNA sequencing.

As will be explained in detail further below, it has been shown that the region of interest of the object which is exposed to the analysis liquid can be comparatively small, leading to an undesirable high dilution of the extracted nucleic acids. Notably, for the extraction and cleanup processes, it is desirable that the volume of the analysis chamber 6 is less than 200 microliters or even less than 50 microliters. It has further been shown that it is desirable for the analysis chamber 6 to have a known volume which preferably is constant for different objects. However, simply reducing the volume by reducing the width of the planar gap between the substrate 4 and the cover 3 influences the filling behavior of the liquid leading to undesirable air entrapment which may result in incomplete coverage of the object with the analysis liquid.

The inventors have found that it is possible to provide a device and a method for adapting the volume of the analysis chamber depending on the position and the extent of the region of interest from which nucleic acids are to be extracted and further depending on predefined criterions for the volume of the analysis chamber. It has been shown that this allows efficient prevention of undesirable dilution of the extracted nucleic acids. It has further been shown that the same type of micro chamber arrangement can be adapted to different objects so that for each of these objects, the volume of the analysis chamber can be reduced to a predefined value which is the same for each object. Using the same micro chamber arrangement for different objects allows implementation of a standard workflow. Further, having a constant analysis chamber volume for different objects allows implementation of controlled downstream processing. As such, efficient integration of digital pathology and molecular diagnostics can be obtained.

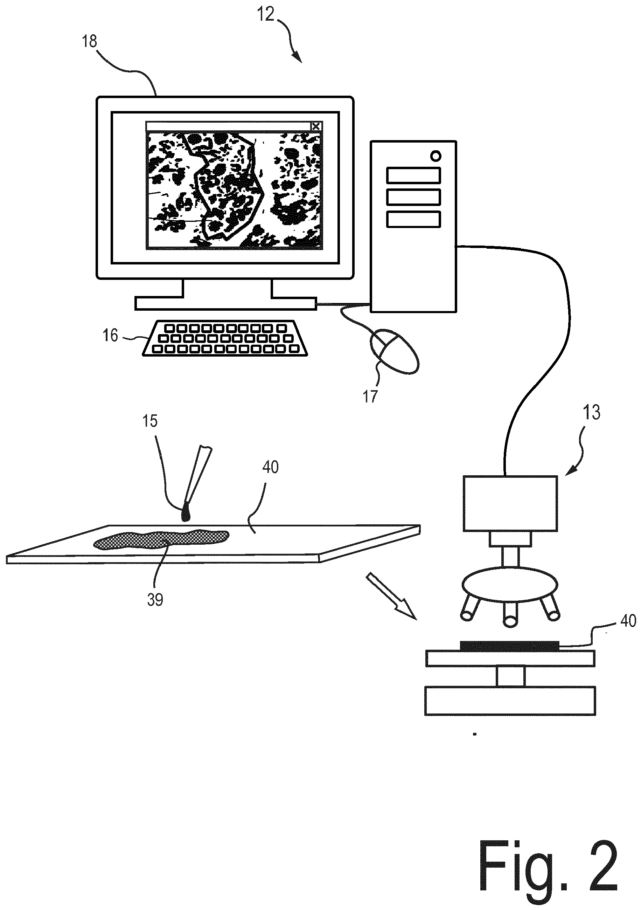

Figure 2 is a schematic illustration of a data processing system 12 and a first image acquisition system 13 which is used for identifying one or more regions of interest of an object 39 which is a section from a biopsy or from a resection. The one or more regions of interest are identified by staining the object 39.. The identified one or more regions of interest are later used to isolate, on an unstained object taken from the same biopsy or from the same resection, at least one region of interest which corresponds to the region of interest identified using the stained object 39 and to control the volume of the analysis chamber of the micro chamber arrangement 1 (shown in Figure 1). However, the invention is not limited to the configuration of the micro chamber arrangement shown in Figures 1A and 1B. It is conceivable that alternative configurations of the micro chamber arrangement are used for controlling the volume of the analysis chamber according to the techniques as described herein.
Typically, tissue sections have an inherent heterogeneity which includes different reactive cell populations. However, the reliability of the diagnostic results critically depends on the relative abundance of the cell population which is to be examined. It is therefore desirable to expose to the analysis liquid only a portion (i.e. a region of interest) of the object in which the cell population to be examined is present in sufficient abundance. Specifically, tumor tissues generally consist of many different cell types, not only cancer cells, and even the cancer cells can differ a great deal in molecular constitution in different areas of the tumor.

As is illustrated in Figure 2, the object 39 which is used to identify the one or more regions of interest is placed on a microscope slide 40. In order to identify the one or more regions of interest, the object 39 is stained using a stain 15. The stain 15 may be selected depending on a clinical indication. By way of example, the sample may be stained using hematoxylin. Alternatively or additionally, immuno-histochemistry (IHC) and/or immunofluorescent stains may be used. Using the one or more stains, particular features of the object may be highlighted. The stained object 39 is inspected using an image acquisition system 13. The image acquisition system 13 may be a digital scanner, in particular a line sensor-based digital scanner. The digital scanner may be configured as a whole slide imaging (WSI) system. It is also conceivable that a camera and/or a microscope is used to acquire the digital image data for identifying the region of interest of the stained object 39. The digital image data may be acquired using transmitted light imaging and/or reflected light imaging. The image acquisition system used for acquiring the image data may be configured to yield images having, for example, a size of at least 1,000 x 1,000 pixels or at least 3,000 x 3,000 pixels, or at least 10,000 x 10,000 pixels, or at least 100,000 x 100,000 pixels.

The digital image data which are acquired from the object 39 are transmitted to the data processing system 12. The data processing system 12 is configured to read the digital image data. The data processing system 12 includes a graphical user interface which displays, on a display device 18, an image which is generated depending on the digital image data. The data processing system 12 is configured to automatically or semi-automatically (i.e. using user input received via one or more input devices such as the mouse 17 and/or the keyboard 16) determine one or more regions of interest depending on the digital image data.

The one or more regions of interest which are identified using the stained object 39 are used to identify one or more regions of interest of an unstained object from which nucleic acids are to be extracted. The unstained object is a section from the same biopsy or from the same resection as the stained object 39 used for identifying the region of interest. In particular, as will be described in detail in the following paragraphs, one or more regions of interest ofthe unstained object are determined relative to the substrate on which the unstained object is disposed, depending on the digital image data acquired from the stained object 39 and further depending on digital image data acquired from the unstained object disposed on the substrate 4 (shown in Figure 1) of the microanalysis chamber 1.

The one or more regions of interest of the unstained object which are determined relative to the substrate are used to isolate the regions of interest and to control the volume ofthe analysis chamber in which the nucleic acids are to be extracted from the object. These processes will be described in more detail further below.

The device includes a second image acquisition system (not illustrated) which is configured to acquire digital image data from the unstained object. The acquired digital image data may be indicative of a position and extent of the unstained object relative to the substrate. The data processing system 12 is configured to semi-automatically (i.e. using user interaction) or automatically determine the position and extent of the one or more regions of interest of the unstained object relative to the substrate by comparing the digital image data acquired from the stained object 39 with the digital image data acquired from the unstained object. Comparing the digital image data may include identification of object features which are common or similar to both the image of the stained object 39 and the image of the unstained object. In order to facilitate the comparison between the digital data of the stained object with the digital image data of the unstained object, it is conceivable that the unstained object is also stained and/or deparaffinated before acquiring of the digital image data in order to highlight features required for identifying the corresponding region of interest in the object from which nucleic acids are to be extracted. By way of example, the object from which nucleic acids are to be extracted is stained using hematoxylin.

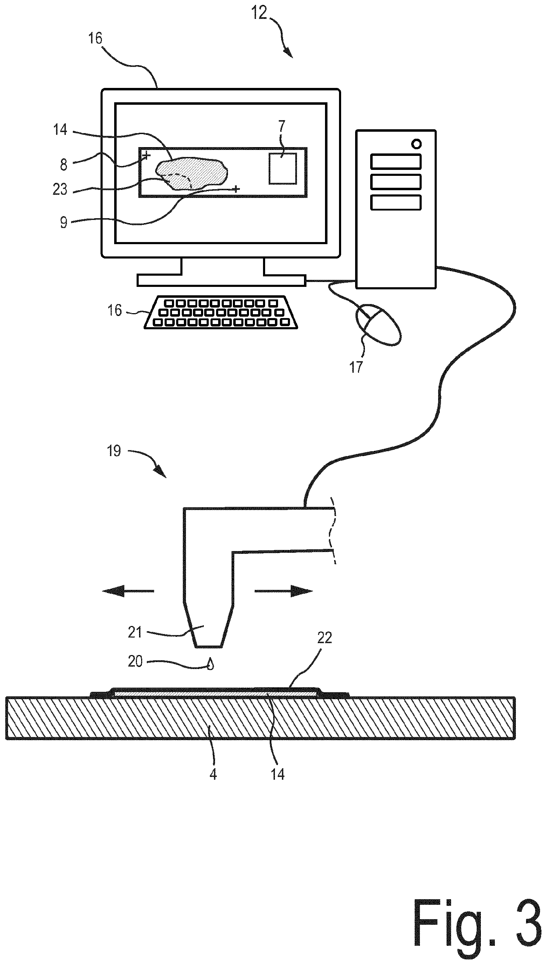

The second image acquisition system may be a camera, a microscope and/or a digital scanner. The second image acquisition system may be in a known spatial relationship (in particular a known position and orientation) relative to the substrate when acquiring the digital image data. In particular, the second image acquisition system may be in a known spatial relationship relative to the substrate, wherein the substrate is mounted to a sample mount of a printer which is used to isolate the region if interest and/or to deposit a volume reducing element for controlling the volume of the analysis chamber. These processes are described in detail in the following paragraphs. Additionally or alternatively, the digital image data may be acquired from one or more fiducial markers which are provided on the substrate and which are used to determine the position and the extent of the region of interest relative to the substrate. Figure 3 illustrates how the device isolates the one or more determined regions of interest from the object 14.

The regions of interest are isolated by depositing a film-shaped capping structure 22 on a surface portion of the object 14 which is complementary to the identified one or more regions of interest. The film-shaped capping structure is deposited using a printer 19 (shown in Figure 3), in particular an ink-jet printer, which is in signal communication with the data processing system 12. The data processing system 12 is configured to control the printer 19 to deposit ink 20 on the object so as to form the film-shaped capping structure 22 which covers the surface portion of the object 14 which is complementary to the one or more identified regions of interest. The film-shaped capping structure 22 may be formed by one or more ink layers. A thickness of the film-shaped capping structure may be less than 100 micrometers, less than 75 micrometers, or less than 50 micrometers. The thickness may be greater than 5 micrometers.

The printing process which is performed using the printer 19 may be a non-impact printing process, in particular a dot-matrix printing process and/or an ink-jet printing process using one or more nozzles 21 of the ink-jet printer for ejecting the ink 20 toward the substrate 4. The printer may be configured to move the nozzle 21 in directions parallel to the object receiving surface of the substrate 4. The ink may be solidify and/or may be solidifiable. The ink may solidify, for example by drying. Additionally or alternatively, the ink may be solidifiable by exposing the ink to heat, pressure, electromagnetic radiation (such as ultraviolet light) and/or chemicals. Additionally or alternatively, solidification of the ink may be performed using a cooling device for cooling the ink (e.g. when solid ink is used). It is conceivable that the device uses technologies for isolating the one or more regions of interest from the unstained object 14 which are different from the one described above. By way of example, it is conceivable that a tape is used to cover a portion of the object which is not part of the region of interest. Further, depending on the analysis which is performed, it is conceivable that no region of interest is isolated and the entire object is exposed to the analysis chamber. In this case, the entire object represents the region of interest.

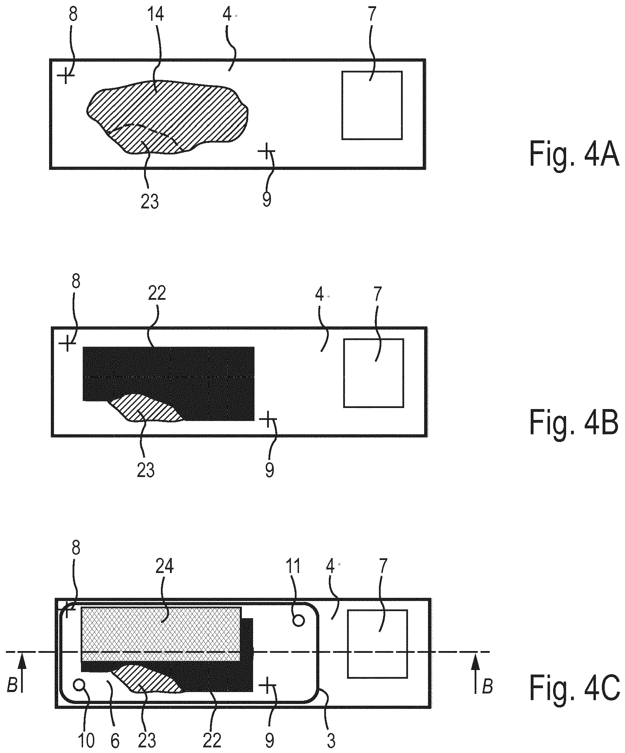

Figure 4B is a top view of the capping structure 22, the object 14 and the substrate 4. The film-shaped capping structure 22 leaves the region of interest 23 of the object 14 exposed. Figure 4A shows the object 14 and the substrate 4 before deposition of the capping structure 22.

In order to control the volume of the analysis chamber 6 (shown in cross-section in Figure 1B), the data processing system 12 is configured to deposit a volume reducing element within the analysis chamber 6. The volume reducing element reduces the volume of the analysis chamber available for the analysis liquid (which may include a lysis buffer). In the exemplary embodiment, the volume reducing element is deposited using the printer 19 (shown in Figure 3). Figure 4C shows an exemplary volume reducing element 24 which is deposited on the substrate 4 and the film-shaped capping structure 22 and which is covered by the cover 3. The volume reducing element 24 is configured to leave the region of interest 23 exposed.

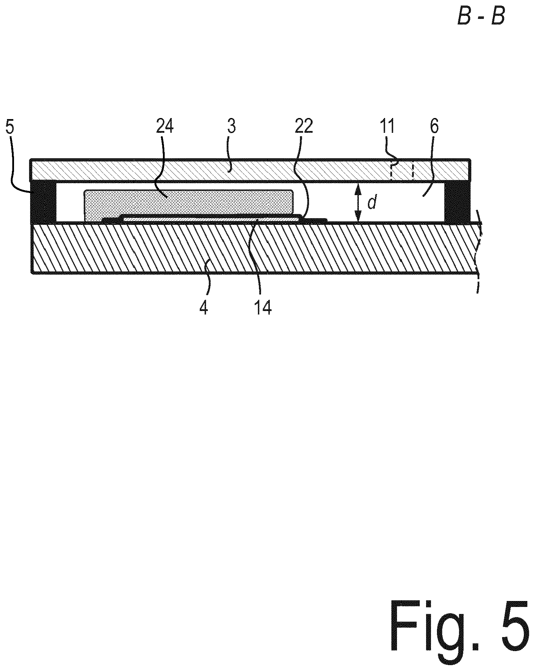

Figure 5 is a cross-section taken along line *B* - *B* of Figure 4C. As is illustrated in Figure 5, the volume reducing element 24 has an extent, measured along a width direction of the planar gap formed by the substrate 4 and the cover 3, which substantially amounts to the width d of the planar gap. In the embodiment of the micro chamber arrangement 1, which is shown in Figures 4C and 5, the volume reducing element 24 is separated from the cover 3 by a gap having a width, which is less than 20% or less than 10% or less than 5% the width d (shown in Figure 5) of the of the planar gap formed by the substrate 4 and the cover 3. The width of the separation gap formed by the volume reducing element 24 and the cover 3 may be less than 30 micrometers or less than 20 micrometers or less than 10 micrometers. Separation gaps of such widths do not allow the analysis liquid to enter into the separation gap. The volume reducing element may be configured to be hydrophobic which allows increasing the width of the separation gap without allowing the analysis liquid to enter the separation gap.

The separation gap between the volume reducing element 24 and the cover 3 allows for an accurate attachment of the cover 3 to the substrate 4 via the spacer element 5, irrespective of tolerances in the height of the volume reducing element 24 which may result from the printing and/or curing process. This ensures a highly accurate value for the volume ofthe analysis chamber and reliable liquid-tight seal. However, a still satisfactory accuracy for the analysis chamber volume and an acceptable seal can be obtained if the volume reducing element 24 is in contact with the cover 3.

The volume reducing element 24 is deposited layer-by-layer using the printer 19. In other words, layers of ink are deposited on top of other layers of previously deposited and solidified layers of ink. The volume reducing element 24 may be formed by more than 10, more than 20, or more than 50 layers which are stacked on top of each other. Each of the layers may have a thickness which is less than 100 micrometers or less than 80 micrometers or less than 50 micrometers. The thickness may be greater than 5 micrometers or greater than 10 micrometers. The thickness of the layers may be adapted by adapting a configuration of the printing head (such as a spacing between neighboring nozzles and/or an inside diameter of the nozzle) and/or by adapting pulse settings for dispensing the ink.

It has been shown that using an ink-jet printer for depositing a UV-curable ink, printing and curing of layers having a thickness of, for example, 0.5 millimeter can be done within a few minutes. The ink-jet printer can print at a high frequency (few kHz) so that within a few seconds, one layer of ink can be printed on the substrate and cured. With a typical layer thickness of approximately 15 micrometers and a printing and curing time of approximately 10 seconds, it takes 5.5 minutes to deposit the volume reducing element. It is conceivable to parallelize this process to deposit volume reducing elements simultaneously on multiple substrates which are arranged side-by-side in a row.

A height of the volume reducing element 24, as measured along a width direction of the planar gap formed by the substrate 4 and the cover 3, may have a value which is greater than 50 micrometers, greater than 80 micrometers or greater then 100 micrometers. The height may be less than 1500 micrometers or less than 1000 micrometers.

As can be seen in Figure 4C, the position and extent of the volume reducing element 24 on the substrate 4 is adapted depending on the position and extent of the region of interest 23. This allows adaptation of a standardized and/or commercially available micro chamber arrangement to the position and extent of the region of interest 23 and thereby prevention of dilution of the extracted nucleic acids if the extent of the region of interest 23 is small. Furthermore, a constant volume of the analysis chamber 6 can be provided for a plurality of different objects using the standardized and/or commercially available micro chamber arrangement. This allows for a standardized workflow and controlled downstream processing.

As can be seen in Figure 4C, the position and extent of the volume reducing element 24 on the substrate is further determined so that the fluid ports 10 and 11 are in fluid communication via a fluid channel, which is provided by the analysis chamber 6, wherein the region of interest 23 is arranged within the fluid channel.

The data processing system 12 is configured to automatically or semi-automatically (i.e. based on user interaction) determine the position and extent of the volume reducing element 24 (measured in a plane parallel to the object receiving surface) depending on the position and extent of the region of interest 23 relative to the substrate 4 (measured in the plane parallel to the object receiving surface) and further depending on a predetermined level by which the volume of the analysis chamber 6 is to be reduced. The position and extent of the region of interest relative to the substrate may be determined depending on the digital image data acquired from the object 14 using the second image acquisition system. The data processing system 12 may further be configured to determine the height of the volume reducing element 24 depending on the position and the extent of the region of interest 23 and the predetermined level. The height of the volume reducing element 24 determines the width of the separation gap between the volume reducing element 24 and the cover 3.

The determination of the position and extent of the volume reducing element 24 may further be performed depending on known behavior of the deposited liquid ink which solidifies or which is solidifiable to form at least a portion of the volume reducing element (such as an ink flow behavior). By way of example, in order to generate control signals for controlling the printer, the data processing system may modify the determined position and extent of the volume reducing element 24 so that after solidification of the ink, the solidified ink has the desired position and extent.

Semi-automatic determination of the position and extent of the volume reducing element 24 may be performed using the graphical user interface of the data processing system. The data processing system may be configured to determine the position and the extent of the region of interest 23 relative to the substrate 4 using one or more fiducial markers 8 and 9, which are provided on the substrate 4. The fiducial markers 8 and 9 may be configured to be detectable using the image acquisition system 13. Additionally or alternatively, the second image acquisition system may be in a known spatial relationship relative to the substrate when acquiring the digital image data for determining the position and extent of the region of interest relative to the substrate.

It is conceivable, that the device is configured so that the deposition of the film - shaped capping structure 22 and the volume reducing element 24 is performed in a substantially continuous deposition process which may be performed by the printer.

Figure 6A illustrates a micro chamber arrangement 1 according to a second exemplary embodiment. The micro chamber arrangement 1 of the second exemplary embodiment may be manufactured using the device for controlling the volume of the analysis chamber as has been described in connection with Figures 2 and 3. In the micro chamber arrangement of the second exemplary embodiment, volume reducing elements 26 and 27 are disposed on the substrate 4, each of which having a longitudinal shape extending along a straight or curved longitudinal axis. The height of the volume reducing elements 26 and 27 may be configured as has been described in connection with the volume reducing element 24 (shown in Figure 5). Specifically, the volume reducing element 26 and/or 27 may be separated from the cover 3 by a separation gap or may be abuttingly in contact with the cover 3.

Each of the volume reducing elements 26 and 27 has a width *a, b,* measured parallel to the object receiving surface of the substrate 4 which is less than five times, or less than three-times or less than two times the width d (shown in Figure 5) of the planar gap formed by the substrate 4 and the cover 3. Each of the volume reducing elements 26 and 27 is configured to function as a barrier which is configured to prevent the analysis liquid which is introduced into analysis chamber from leaking out of the analysis chamber 6. Thereby, using the volume reducing elements 26 and 27, two air-filled spaces 28 and 29 are formed which are located outside the analysis chamber 6 and between the substrate 4 and the cover 3. As can be seen from Figure 6A, the volume reducing elements 26 and 27 reduce the amount of ink which is necessary to reduce the volume of the analysis chamber 6 by the predetermined level. The longitudinal and comparatively narrow shape of the volume reducing elements 26 and 27 also reduce the stress which is introduced into the substrate 4 by the volume reducing elements 26 and 27.

Figure 6B illustrates a micro chamber arrangement 1 according to a third exemplary embodiment. The micro chamber arrangement 1 of the third exemplary embodiment may be manufactured using the device for controlling the volume of the analysis chamber, as has been described in connection with Figures 2 and 3. The micro chamber arrangement of the third exemplary embodiment 1 has a volume reducing element 30, which, in a across-section through the analysis chamber 6 parallel to the object receiving surface of the substrate 4, forms an analysis chamber 6 which is a convex hull for at least the region of interest 23 and for at least the fluid ports 11 and 10. It has been shown that using such a configuration of the analysis chamber 6, it is possible to prevent undesirable air entrapment when the analysis liquid is introduced into the analysis chamber. The volume reducing element may further be optimized based on experience and/or flow simulations.

The volume reducing element 30 of the third exemplary embodiment may be generated using a mask 38 (shown in Fig. 6C) which is calculated using a procedure explained in the following paragraphs and which may be executed by the data processing system which has been described in connection with Figures 2 and 3.

In a plane parallel to the object receiving surface of the substrate 4, a positive mask is defined by the position and extent of the region of interest 23. The edges of the mask of the region of interest 23 may be shifted outwardly so that the edge of the positive mask is spaced outward from the edge of the region of interest 23 by at least a predefined distance and the region of interest 23 only represents a portion of the positive mask. Thereby, residues of the analysis liquid, which, as a result of capillary action, remain in the corners of the analysis chamber, do not cover the region of interest 23. This allows keeping the region of interest 23 free from residues of the analysis liquid after completion of the discharging process for discharging the analysis liquid from the analysis chamber 6. This prevents undesirable modification of the region of interest 23 so that the micro chamber arrangement 1 containing the object can be stored in a storage unit for later access and verification.

A morphological dilation operation may be applied to the positive mask using a structuring element having a rounded or circular shape of a predefined radius. By way of example, the radius may have a value of more than 0.2 millimeters and/or less than 10 millimeters or less than 5 millimeters or less than 1 millimeter. It has been shown that the morphological dilation operation provides improved microfluidic flow of the analysis liquid through the analysis chamber, preventing undesirable air entrapment.

Then, in the plane parallel to the object receiving surface of the substrate 4, for each of the fluid ports 10, 11, a further positive masks is calculated. One or both of the fluid port masks may be modified by shifting the edge of the respective fluid port mask outwardly so that the edge is spaced outward from the edge of the respective fluid port by at least a predetermined distance. In a similar way as has been described in connection with the region of interest mask, a morphological dilation operator may be applied to one or both of the fluid port masks. Through these modifications of the mask, a volume reducing element can be obtained which facilitates alignment of the cover relative to the volume reducing element.

As a next step, a combined mask is generated by applying a logical OR operator to the region of interest mask and to the fluidic port masks. Then, a convex hull is calculated for the combined mask. The convex hull represents the mask 38 (illustrated in Figure 6C) used for determining the volume reducing element 30 (illustrated in Figure 6B) and represents a cross-section through the analysis chamber 6 in the plane parallel to the object receiving surface of the substrate 4.

Figures 7A and 7B illustrate a process for manufacturing a micro chamber arrangement 1 according to a fourth exemplary embodiment. The micro chamber arrangement according to the fourth exemplary embodiment includes a volume reducing element 34 (shown in Figure 7B), which is generated using a mask 37 (shown in Figure 7C). The mask 37 is calculated using a procedure which is described in the following paragraphs and which may be executed by the data processing system which has been described in connection with Figures 2 and 3.

In the plane parallel to the object receiving surface of the substrate 4, locations of pseudo fluid ports 31 and 32 (illustrated in Figure 7A) are determined, each of which corresponding to one of the fluid ports 10 and 11. An extent of the pseudo fluid ports 31 and 32 may be equal to or different from the extent of the fluid ports 10 and 11. Each of the pseudo fluid ports 31 and 32 represent a positive mask. Further, also for each of the fluid ports 10 and 11, a positive mask is generated in a same manner as has been described in connection with the micro chamber arrangement according to the third exemplary embodiment (illustrated in Figures 6B and 6C). The positive mask of the fluid port 10 and the positive mask of its corresponding pseudo fluid port 32 are combined using a logical OR operator. Then, a convex hull is calculated for the combined mask of the fluid port 10 and its pseudo fluid port 32. The same procedure is applied to the positive masks of the fluid port 11 and its corresponding pseudo fluid port 31. Using the logical OR operator, both convex hulls and a region of interest mask are combined.

The region of interest mask may be generated in the same manner as has been described in connection with the third exemplary embodiment illustrated in Figures 6B and 6C. A morphological dilation operator may be applied to the combined mask in order to smoothen the edges. The resulting mask is shown in Figure 7C which forms the basis for determining the volume reducing element 34 shown in Figure 7B. The volume reducing element 34 forms two longitudinal channels 35, 36 for connecting the region of interest 23 to each of the fluid ports 10 and 11. Thereby, a small volume of the analysis chamber can be obtained, wherein the longitudinal channels reduce the risk of undesired air entrapment.

It is further conceivable that using the calculated masks 38 (shown in Figure 6C) and 37 (shown in Figure 7C) volume reducing elements of are generated which have a shape different from the shapes of the volume reducing elements 30 and 34 (illustrated in Figures 6B and 7B). By way of example, it is conceivable that based on the mask 38 or 37, one or more volume reducing elements are generated having a longitudinal shape so as to generate an air-filled space which is outside the analysis chamber and between the substrate and the cover, in a similar manner as has been described in connection with the micro analysis chamber of the second exemplary embodiment which is illustrated in Figure 6A.

The above embodiments as described are only illustrative, and not intended to limit the technique approaches of the present invention. Although the present invention is described in details referring to the preferable embodiments, those skilled in the art will understand that the technique approaches of the present invention can be modified or equally displaced without departing from the protective scope of the claims of the present invention. In particular, although the invention has been described based on a projection radiograph, it can be applied to any imaging technique which results in a projection image. In the claims, the word "comprising" does not exclude other elements or steps, and the indefinite article "a" or "an" does not exclude a plurality. Any reference signs in the claims should not be construed as limiting the scope.

## Claims

1. A device for controlling a volume of an analysis chamber (6) of a micro chamber arrangement (1) to which a region of interest (23) of an object (14) is exposed, wherein the volume is controlled using a volume reducing element (24) which is deposited on a surface of the micro chamber arrangement;
wherein the device comprises a deposition unit configured to
determine a position and an extent of the volume reducing element depending on (a) the region of interest (23) and further depending on (b) a predetermined level by which a volume of the analysis chamber (6) is reduced using the volume reducing element (24); and to
deposit the volume reducing element (24) depending on the determined position and extent.

2. The device according to claim 1, wherein the deposition unit is configured to deposit the volume reducing element (24) so that the analysis chamber (6) has a predetermined volume.

3. The device according to claim 1 or 2, wherein the deposition unit is configured to deposit the volume reducing element (24) layer-by-layer, preferably by printing.

4. The device according to any one of the preceding claims, wherein the deposition unit is configured to deposit a liquid on the surface of the micro analysis chamber (1), wherein the liquid solidifies and/or is solidifiable to form at least a portion of the volume reducing element (24).

5. The device according to any one of the preceding claims, wherein the device is configured to acquire digital image data from at least a portion of the object (14);
wherein the deposition unit is configured to automatically or semi-automatically determine the position and the extent of the volume reducing element (24) depending on at least a portion of the digital image data.

6. The device according to any one of the preceding claims, wherein the deposition unit is configured to determine the position and the extent of the volume reducing element (24) so that at least a portion of the volume reducing element (24) is configured to function as a barrier;
wherein the barrier is configured to prevent an analysis liquid which is introduced into the analysis chamber (6) from leaking out from a gap formed between a substrate (4) of the micro chamber arrangement (1) and a cover (3) of the micro chamber arrangement (1).

7. The device according to claim 6, wherein the barrier is used to form an air-filled space (28, 29) which is outside the analysis chamber (6) and between the substrate (4) and the cover (3).

8. The device according to any one of the preceding claims, wherein the deposition unit is configured to determine the position and the extent of the volume reducing element (24) further depending on a position and/or depending on an extent of one or more fluid ports (10, 11) of the micro chamber arrangement (1) which open into the analysis chamber (6).

9. The device according to claim 8, wherein the deposition unit is configured to determine the position and the extent of the volume reducing element (24) so that in a cross-section through an interior of the analysis chamber (6) taken parallel to the surface on which the object is disposed, the extent of the analysis chamber (6) is substantially a convex hull at least for the region of interest (26) and at least for the one or more fluid ports (10, 11).

10. The device according to claim 8 or 9, wherein the deposition unit is configured to determine the position and the extent of the volume reducing element (24) so that one or more longitudinal channels (35, 36) are formed using the volume reducing element (24) for connecting the region of interest (23) to the one or more fluid ports (10, 11).

11. The device according to any one of the preceding claims, wherein the deposition unit is further configured to determine a position and an extent of a film-shaped capping structure (22) which is configured to prevent a portion of the object (14) not being part of the region of interest (23) from being exposed to the analysis chamber (6).

12. A method of controlling a volume of an analysis chamber (6) of a micro chamber arrangement (1) to which a region of interest (23) of an object (14) is exposed, wherein the volume is controlled using a volume reducing element (24) which is deposited on a surface of the micro chamber arrangement (1);
wherein the method comprises:
determining a positon and an extent ofthe volume reducing element (24) depending on (a) the region of interest (23) and further depending on (b) a predetermined level by which a volume of the analysis chamber (6) is reduced using the volume reducing element (24); and
depositing the volume reducing element (24) depending on the determined position and extent.

13. A processing system (12) for controlling a volume of an analysis chamber (6) of a micro chamber arrangement (1) to which a region of interest (23) of an object (14) is exposed, wherein the volume is controlled using a volume reducing element (24) which is deposited on a surface of the micro chamber arrangement (1);
wherein the processing system (12) is configured to:
read and/or generate position data indicative of a position of the region of interest (23) of the object (14); and to
calculate a position and an extent of the volume reducing element (24) depending on (a) the position data and further depending on (b) a predetermined level by which a volume of the analysis chamber (6) is reduced using the volume reducing element (24).

14. A program element for controlling a volume of an analysis chamber (6) of a micro chamber arrangement (1) to which a region of interest (23) of an object (14) is exposed, wherein the volume is controlled using a volume reducing element (24) which is deposited on a surface of the micro chamber arrangement (1);
wherein the program element, when being executed by a processor, is adapted to carry out:
reading and/or generating position data indicative of a position of the region of interest (23) of the object (14); and
calculating a position and an extent of the volume reducing element (24) depending on (a) the position data and further depending on (b) a predetermined level by which a volume of the analysis chamber (6) is reduced using the volume reducing element (24).

15. A computer readable medium having stored thereon the computer program element of claim 14.
